# EUROPEAN PATENT SPECIFICATION

(11) **EP 3 769 940 B1**
(45) Date of publication and mention of the grant of the patent: **09.08.2023**
(21) Application number: 19188610.0
(22) Date of filing: 26.07.2019
(51) Int. Cl.: B29C 65/48, F03D 1/06, B29C 65/00, B29C 65/50, B29C 65/78, B29L 31/08, B29C 65/52

(54) **A SYSTEM AND METHOD FOR ATTACHING AN ADD-ON ON A WIND TURBINE BLADE**
SYSTEM UND VERFAHREN ZUM ANBRINGEN EINES AUFSATZES AN EINER WINDTURBINENSCHAUFEL
SYSTÈME ET PROCÉDÉ POUR FIXER UN MODULE D'EXTENSION SUR UNE PALE DE TURBINE ÉOLIENNE

(43) Date of publication of application: 27.01.2021
(73) Proprietor: Polytech A/S, 6740 Bramming (DK)
(72) Inventor: GRØNKJÆR, Rune Diederichsen, 6740 Bramming (DK); MEIER, Anne Louise Høj, 6740 Bramming (DK)
(74) Representative: Zacco Denmark A/S

(56) References cited:
- EP-A1- 2 927 482
- WO-A1-2016/066852
- WO-A1-2016/075619
- US-A1- 2007 036 659
- US-A1- 2019 195 202

## Description

The present invention relates to system for attaching an add-on on a wind turbine blade, comprising
- a wind turbine blade having
   - a leading edge and a trailing edge, having a blade profile between them,
   - a first face, a second face, an application surface at the leading edge and/or at the trailing edge,
   - a longitudinal extension extending from a root end of the wind turbine blade to a tip end of the wind turbine blade,
   - an edge centre indicating a centre of the blade profile along the longitudinal extension either at the leading edge or the trailing edge,
- an add-on configured to be attached on the wind turbine blade by an adhesive applied between an inside of the add-on and the application surface of the wind turbine blade, the add-on having at least one outer edge,
- a masking tape to be detachably applied on the application surface of the wind turbine blade in a predetermined distance from the outer edge,
- a joint made of a sealant provided at least between the outer edge of the add-on and the masking tape, the joint is formed to taper from the add-on towards the masking tape.

The present invention also relates to a method for attaching an add-on on a wind turbine blade.

Add-ons such as protective covers to be attached to and along the leading edge of a wind turbine blade are known. It has been more and more common to retro-fit the wind turbine blades with protective covers when the leading edges have been exerted for erosion.

Since the advantages of attaching add-ons such as protective covers or serrated elements to the trailing edge are many, the suppliers of wind turbine blades are also applying the add-ons on new wind turbine blades. This is often performed in production and manufacturing facilities.

As discussed in the prior art, the transition area between an add-on and the surface of the wind turbine blade may be problematic, because even the slightest unevenness may cause deterioration and/or delamination of the materials involved as a result of the large aerodynamic forces at work during operation of the wind turbine blade.

This have been solved by the solution as described in WO2018051153 A1. Hence the importance of ensuring that the protective covers are properly attached to the wind turbine blade is vital for the service time of the protective covers. Furthermore, due to wind flow over the wind turbine blades it is also vital that the transition area is not jeopardising the air flow and creating turbulence.

Prior solutions are known from US 2019/195202 A1, US 2007/036659 A1, WO 2016/066852 A1 and EP 2 927 482 A1.

Even though add-ons such as protective covers are attached before the wind turbine blade is mounted, it has proven difficult to provide a uniform and smooth joint in the entire length of the wind turbine blade. Hence, there is a need for providing a system and method for overcoming these difficulties.

It is an object of the present invention to wholly or partly overcome the above disadvantages and drawbacks of the prior art. More specifically, it is an object to provide an improved system and method for attaching an add-on on a wind turbine blade.

The above objects, together with numerous other objects, advantages and features, which will become evident from the below description, are accomplished by a solution in accordance with claim 1.

Hereby, is obtained that it is possible to provide a long joint, for instance in the longitudinal extension, having a long transition from the add-on to the wind turbine blade. In addition, by using the masking film it is possible to correct and alter the joint during the process. Also, when the joint is covered by the masking film during the curing, the sealant of the joint has a longer curing time which facilitates an eventual alteration of the joint. Moreover, the joint is protected against dust and dirt from the surroundings. Finally, by using the masking film, there is no finishing of the joint when the masking film and masking tape have been removed. Hence, a smooth, even and uniform joint is obtained.

Moreover, the add-on may be configured to be attached along at least a part of either the leading edge or the trailing edge along the longitudinal extension of the wind turbine blade, and the masking tape is to be detachably applied along the longitudinal extension on the application surface of the wind turbine blade in a predetermined distance from the edge centre.

Furthermore, the add-on may be a protective cover being configured to be attached along at least a part of the leading edge along the longitudinal extension by an adhesive applied between an inside of the protective cover and the application surface of the leading edge of the wind turbine blade, the protective cover is elongated in a longitudinal direction and has an at least substantially U-formed cross-section, the protective cover comprises a central cover section extending in the longitudinal direction and two peripheral cover sections extending in the longitudinal direction at either side of the central cover section and each peripheral cover section having the outer edge.

In addition, the add-on may be a serrated element or other appendixes being configured to be attached along at least a part of the trailing edge along the longitudinal extension by an adhesive applied between an inside of the serrated element or the appendix and the application surface of the trailing edge of the wind turbine blade.

Moreover, the masking film may be detachably attached to the protective cover or the serrated element at the outer edges, the masking film extending across the sealant and a part of the masking tape during forming and curing of the joint.

Furthermore, the masking film may be made of a polymeric material.

Also, the masking film may have permeable properties. Hereby is obtained that the sealant may cure and harden faster.

Moreover, the masking tape may be applied a tape distance from an intended position of the outer edge of the add-on, protective cover or serrated element on the application surface.

In addition, the masking film may have a film adhesive for detachably attaching the masking film to the add-on, protective cover or serrated element.

Also, the masking film may comprise a film part and an adhesive part.

Moreover, the masking film may be detachably attached to the protective cover by applying a tape partly overlapping the masking film and the add-on, protective cover or serrated element.

The masking film may also be adhered to the protective cover from a distance from the outer edge to the outer edge.

Advantageously, the masking tape may have a thickness of less than 0.1 millimetres, preferably less than 0.06 millimetres.

In addition, the protective cover may be made of a polymeric material, such as a polyether-based polyurethane.

Moreover, the central cover section of the protective cover may have a minimum thickness of at least 1 millimetre, and wherein each peripheral cover section has a thickness decreasing from a maximum thickness of at least 1 millimetre to a minimum thickness at its outer edge of less than 1 millimetre.

Also, the joint may have a first height at the outer edge and a second height at the position where it ends at the application surface of the leading edge of the wind turbine blade, wherein the second height is smaller than the first height and smaller than 0.2 millimetres, preferably smaller than 0.1 millimetres.

Also, the joint may have a first height at the outer edge and a second height at the position where it ends at the application surface of the leading edge of the wind turbine blade, wherein the second height is smaller than the first height and smaller than 0.2 millimetres, preferably smaller than 0.1 millimetres.

The first height may be greater than 0.25 millimetres and preferably greater than 0.5 millimetres.

Additionally, the joint may have a width (W) from the outer edge of the add-on to the position where it ends at the application surface of the wind turbine blade, and wherein said width (W) is between 10 and 75 millimetres, preferably between 20 and 50 millimetres.

Furthermore, the joint tapers from the outer edge towards the masking tape substantially with the same inclination as an inclination from the central section of the protective cover to the outer edge of the protective cover.

The annual energy production ratio (AEP) is important for the wind turbine. By applying the present invention, a potential loss in AEP is minimised even though an add-on has been attached to the wind turbine blade.

The masking film may be configured to be positioned across the sealant after it has been applied to the surface and is used to forming the joint with the intended inclination and surface finish.

Moreover, the adhesive may be a pressure sensitive adhesive.

The sealant may be a general-purpose sealant, such as a two-component sealant, having thixo-tropic and UV resistant properties, or a one-component elastic adhesive.

Also, a first side of a double-sided adhesive transfer tape may be adhered to the inside of the protective cover, and wherein a second side of the double-sided adhesive transfer tape is adhered to the surface of the leading edge of the wind turbine blade.

In addition, the first side of the double-sided adhesive transfer tape is adhered to the inside of the protective cover at least substantially along a central axis of the protective cover.

The present invention also relates to a method for attaching an add-on on a wind in a system according to any of the preceding claims, comprising
- applying a masking tape in a predetermined distance from the outer edge,
- attaching the add-on on the wind turbine blade,
- applying a sealant at least between the add-on and masking tape,
- covering the sealant with a masking film,
- providing the joint under the masking film so that the joint tapers from the outer edge of the add-on to the masking tape,
- detaching the masking film, and
- removing the masking tape.

Furthermore, the masking tape may be applied along the longitudinal extension in a predetermined distance from the edge centre.

Moreover, the add-on may be applied either to the leading edge or the trailing edge of the wind turbine blade.

Furthermore, the masking film may be applied to the add-on before applying the sealant.

Also, the masking film may have a film adhesive for detachably attaching the masking film to the add-on, and/or the masking film may be detachably attached to the add-on by applying a masking tape partly overlapping the masking film and the add-on.

Moreover, the sealant may be applied under a part of the outer edge of add-on so that the outer edge is securely attached to the application surface.

Additionally, the joint may be formed and smoothened by using a scraper on the sealant from the opposite side of the masking film in relation to the sealant so that direct contact between the scraper and the sealant is avoided.

Also, surplus sealant may be squeezed out on the masking tape under the masking film.

Furthermore, the application surface of the leading edge or the trailing edge may be prepared before the add-on is attached.

The invention and its many advantages will be described in more detail below with reference to the accompanying schematic drawings, which for the purpose of illustration show some non-limiting embodiments and in which:
Fig. 1 shows a cross-sectional view through a wind turbine blade and a protective cover prior to attachment to the wind turbine blade,
Fig. 2 shows a cross-sectional view through a wind turbine blade and a protective cover after attachment to the wind turbine blade, the dimensions being greatly exaggerated,
Fig. 3 shows a cross-sectional view of an enlarged area of the joint covered by a masking film, the dimensions being greatly exaggerated,
Fig. 4 shows a cross-sectional view of the enlarged area of the joint of Fig. 3 after the masking film and masking tape have been removed,
Figs. 5-9 show a sequence of forming the joint according to the present invention.

All the figures are highly schematic and not necessarily to scale, and they show only those parts which are necessary in order to elucidate the invention, other parts being omitted or merely suggested.

In the following, the present invention will mainly be described in connection with attaching a protective cover to the leading edge of the wind turbine blade, however, the present invention may also be applied in connection with attaching add-ons to the trailing edge of the wind turbine blade, such as for instance serrated elements.

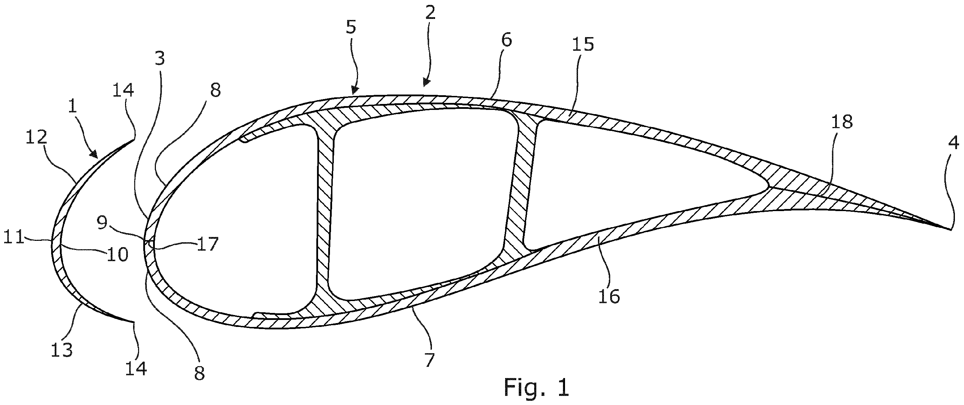

In a cross-sectional view, Fig. 1 shows an add-on 1 such as a protective cover 1 of a preformed type for a wind turbine blade 2. The preformed protective cover 1 may be made of a polymer material, such as a polyether-based polyurethane, however, other materials and reinforcement elements may also be used to make the protective cover.

The wind turbine blade 2 comprises a leading edge 3 and a trailing edge 4 having a blade profile 5 between them, a first face 6, a second face 7, and an application surface 8 at the leading edge 3. Even though not shown, the wind turbine blade may also have an application surface at the trailing edge 4. The wind turbine blade also comprises a longitudinal extension, extending from a root end of the wind turbine blade to a tip end of the wind turbine blade and an edge centre 9 indicating a centre of the blade profile along the longitudinal extension at the leading edge.

The protective cover 1 is configured to be attached along at least a part of the leading edge 3 along the longitudinal extension by an adhesive applied between an inside 10 of the protective cover 1 and the application surface 8 of the leading edge 3 of the wind turbine blade 2.

The protective cover 1 is elongated in a longitudinal direction and has an at least substantially U-formed cross-section as seen in Fig. 1. The protective cover 1 comprises a central cover section 11 extending in the longitudinal direction and two peripheral cover sections 12, 13 extending in the longitudinal direction at either side of the central cover section 11, each peripheral cover section 12, 13 having an outer edge 14,

The central cover section 11 may have a minimum thickness of at least 1 millimetre, and each peripheral cover section 12, 13 may have a thickness decreasing from a maximum thickness of at least 1 millimetre to a minimum thickness of for instance less than 0.5 millimetre.

The particular form of the peripheral cover sections 12, 13 provides for a good transition from the central cover section 11 of the preformed protective cover 1 to the application surface of the wind turbine blade 2. A good transition without edges is of great importance in order to avoid that the wind destroys the materials or detaches the protective cover 1 from the surface of the wind turbine blade 2. Furthermore, a good transition is also important in view of air flow across the protective cover and wind turbine blade so that the AEP substantially is maintained.

The maximum thickness of each peripheral cover section 12, 13 may correspond to the minimum thickness of the central cover section 11. The minimum thickness of the central cover section 11 may be at least 2 millimetres, preferably at least 3 millimetres, more preferably at least 4 millimetres and most preferably approximately 5 millimetres.

The thickness of the central cover section 11 may be at least substantially constant from side to side of the central cover section 11.

As seen in Fig. 1, the preformed protective cover 1 is configured to be attached along at least a part of the leading edge 3 of the wind turbine blade 2 by adhesion to the application surface 8 of the leading edge 3 of the wind turbine blade 2.

The wind turbine blade 2 may comprise a first blade shell 15 and a second blade shell 16 joined together to form wind turbine blade 2 along a first longitudinal joint 17 at the leading edge 3 of the wind turbine blade 2 and along a second longitudinal joint 18 at the trailing edge 4 of the wind turbine blade 2. The preformed protective cover 1 is configured to be attached at the first longitudinal joint 17 as described above. Since the wind turbine blade is mainly exerted for erosion at the leading edge, the following description will focus on attaching the protective cover to the leading edge. The preformed protective cover 1 may be attached at least approximately symmetrical about the first longitudinal joint 17. The first longitudinal joint 17 coincides with the edge centre 9.

In the following, the attachment of the protective cover is described in relation to one protective cover, however, the entire leading edge may be covered by a plurality of protective covers arranged consecutively along the leading edge 3 of the wind turbine blade 2. Preferably, each protective cover slightly overlaps a neighbouring protective cover section. The protective covers are attached to the wind turbine blade by means of a general-purpose adhesive.

In addition, the protective covers have previously been retro-fitted on wind turbine blades which have been damaged by erosion. However, the protective covers are now being attached to new wind turbine blades before they are being mounted on the wind turbines. Hence, the present invention mainly relates to attaching the protective covers to a wind turbine blade in a manufacturing facility, or at a site where the used wind turbine blade is not mounted on the wind turbine. However, the present invention may also be used in relation to retro-fitting a protective cover on a leading edge of a wind turbine blade when present on the wind turbine.

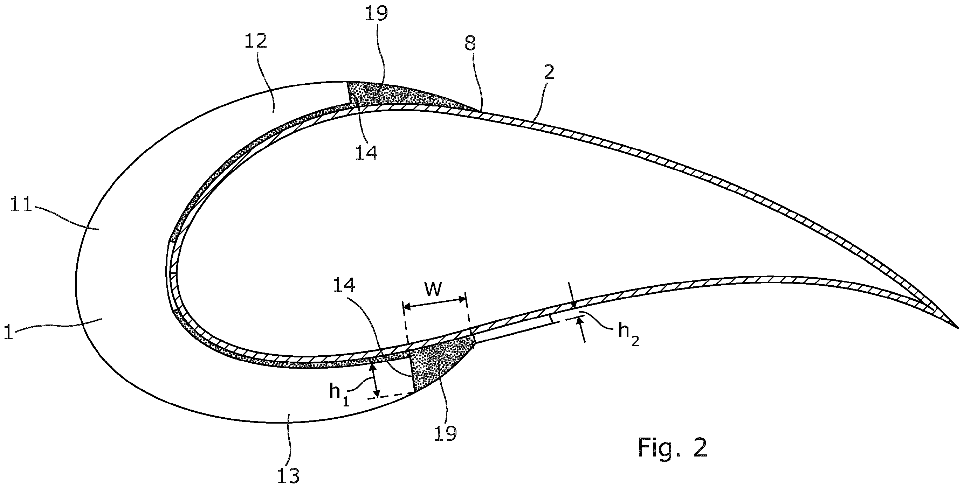

Fig. 2 shows the method of applying a protective cover 1 on a wind turbine blade 2. However, for illustrative purposes, the dimensions in Fig. 2 are greatly exaggerated. Accordingly, the central cover section 11 has a minimum thickness of at least 1 millimetre, and each peripheral cover section 12, 13 has a thickness decreasing from a maximum thickness of at least 1 millimetre to a minimum thickness at its outer edge 14 of less than 1 millimetre.

The protective cover 1 may *inter alia* be attached in the following manner:
- applying a masking tape 20 on the application surface 8 of the leading edge 3 of the wind turbine blade 2 along and at a predetermined distance from the intended position of the outer edge of each peripheral cover section,
- providing the protective cover 1 with the adhesive or applying the adhesive to the inside of the protective cover,
- aligning a centre of the protective cover with the edge centre,
- pressing the inside of the protective cover 1 against the application surface 8 of the leading edge 3 of the wind turbine blade 2,
- applying a sealant between the application surface and the outer edges of the protective cover,
- forming a joint 19 from the sealant which tapers from the outer edge to the application surface at the masking tape.

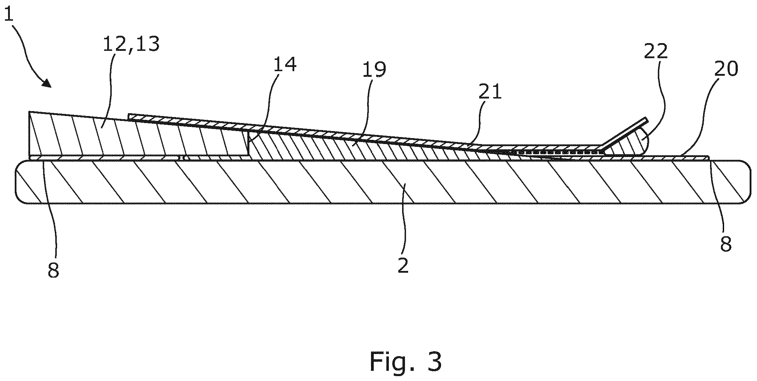

According to the inventive idea, a masking film is detachably attached to the protective cover and is arranged so as to cover the sealant before the sealant is formed to the tapering joint. This will be further described in connection with Fig. 3 below.

The joint 19 provides a very smooth transition from the outer face of the protective cover 1 to the surface 8 of the leading edge 3 of the wind turbine blade 2. In this way, it may be ensured that the flow characteristics of the wind turbine blade 2 are influenced to a minimum by the application of the protective cover.

The distance of the provisionally adhered masking tape 20 from the outer edge 14 of each peripheral cover section 12,13 may be between 10 and 75 millimetres.

In an embodiment, before application of the protective cover 1 on the wind turbine blade 2, a first side of a double-sided adhesive transfer tape or liquid adhesive is adhered to the inside of the protective cover 1, and before eventually providing additional adhesive on the inside of the protective cover 1, a second side of the double-sided adhesive transfer tape is adhered to the application surface of the leading edge 3 of the wind turbine blade 2.

In an embodiment, the first side of the double-sided adhesive transfer tape is adhered to the inside 10 of the protective cover 1 at least substantially along a central axis of the protective cover 1.

The adhesive may be applied on the inside of the protective cover 1 and/or on the application surface 8 of the leading edge 3 of the wind turbine blade 2 as it is firstly applied at a first side in relation to the double-sided adhesive transfer tape and secondly applied at a second side in relation to the double-sided adhesive transfer tape.

As seen in Fig. 2, the sealant forms a joint 19 at each outer edge 14 or sealing between the outer edge 14 of each peripheral cover section 12 ,13 and the application surface 8 of the leading edge 3 of the wind turbine blade 2 so that the outer edge 14 is at least substantially completely covered by the sealant over its entire thickness, and so that the joint 19 or sealing has a tapering form from the outer edge 14 of each peripheral cover section 12, 13 to the application surface 8 of the longitudinal edge of the wind turbine blade 2. The joint 19 or sealing has a first height h1 at the outer edge 14 and a second height h2 at the position where it ends at the application surface 8 of the leading edge of the wind turbine blade 2. The second height h2 is smaller than the first height h1 and smaller than 0.2 millimetres, preferably smaller than 0.1 millimetres. The joint 19 or sealing may be integrally formed with a layer of sealant applied under the peripheral cover section 12, 13. Because the joint 19 or sealing is integrally formed with the layer of sealant, the joint or sealing is much stronger attached to the protective cover 1 and the wind turbine blade 2 than would be the case if the joint 19 or sealing was applied as a separate joint in relation to the adhesive.

Because the sealant used may have UV resistant properties, it may form a suitable joint 19 or sealing being resistant to harsh weather conditions.

Preferably, the joint 19 or sealing has a width W from the outer edge 14 of the peripheral cover section 12, 13 to the position where it ends at the surface 8 of the longitudinal edge of the wind turbine blade 2 and said width W is between 10 and 75 millimetres, preferably between 20 and 50 millimetres

In Fig. 3 a cross-sectional view of an enlarged area of the joint covered by a masking film, the dimensions being greatly exaggerated, is shown.

As described above, the masking tape 20 is detachably applied along the longitudinal extension on the surface 8 in a predetermined distance from the edge centre (not shown). The joint 19 made of a sealant is provided at least between the outer edges 14 of the protective cover 2 and the masking tape 20 in the longitudinal extension, the joint 19 is formed to taper from the protective cover 2 towards the masking tape 20, preferably with the same inclination as the protective cover.

Furthermore, a masking film 21 is detachably attached to the protective cover 2 at the outer edges 14, the masking film 21 is extending across the sealant and a part of the masking tape 20 at least during forming the joint and may be also during the curing of the joint. As described above, the sealant may also be applied between the inside of the protective cover and the application surface.

Surplus sealant 22 may, during the forming of the joint 19, be squeezed out on the masking tape 20 under the masking film 21 thereby facilitating the removal of the surplus sealant.

The masking film 21 may be made of a polymeric material. Furthermore, it may have permeable properties so that curing of the sealant below the masking film 21 is enhanced.

The masking film may have a film adhesive for detachably attaching the masking film to the protective cover, and/or the masking film is detachably attached to the protective cover by applying a masking tape partly overlapping the masking film and the protective cover.

According to the inventive idea, the masking film is configured to be positioned across the sealant after it has been applied to the application surface and is used to form the joint with the intended inclination and surface finish. Additionally, by using the inventive idea, the subsequent cleaning of tools and surfaces is minimised.

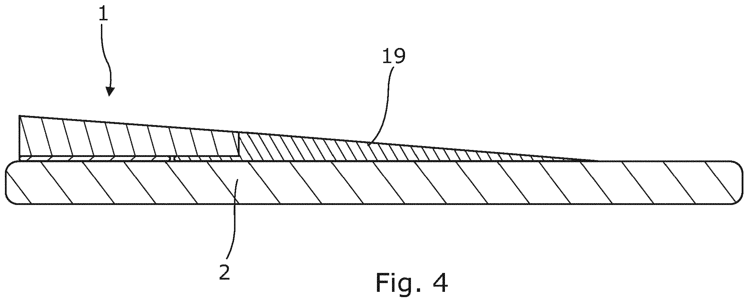

In Fig. 4 the protective cover 1 is shown attached to the wind turbine blade 2, and the joint 19 tapers from the protective cover towards the wind turbine blade. The masking film and the masking tape have been removed.

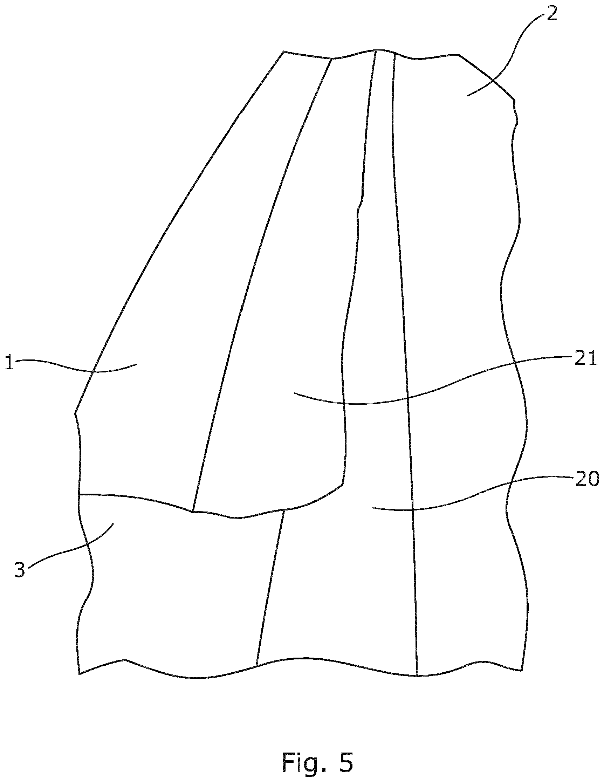

In Fig. 5 to 9 a sequence of forming the joint is shown. According to the inventive idea the following method is used,
- applying a masking tape along the longitudinal extension in a predetermined distance from the edge centre, and
- attaching the protective cover to the leading edge of the wind turbine blade.

In Fig. 5 the protective cover 1 has been partly attached to the leading edge. Hereinafter, the masking film 21 is attached to the protective cover at the outer edge.

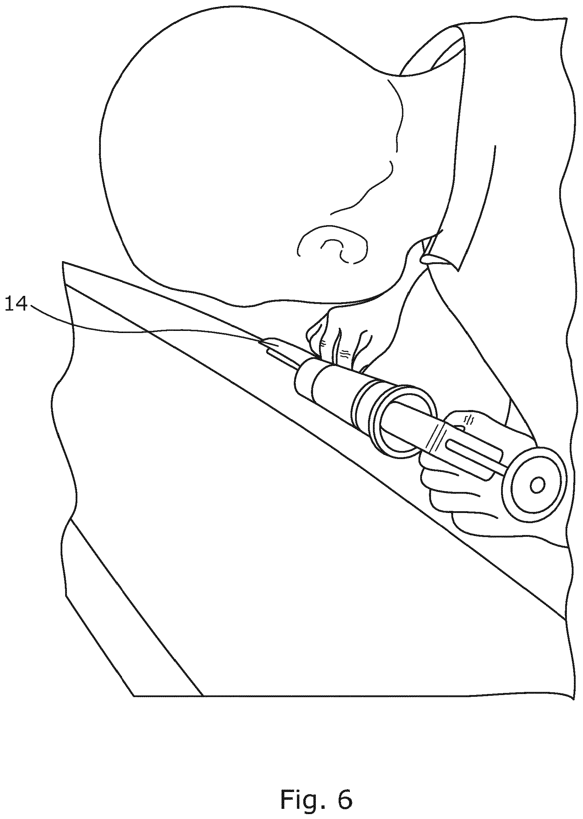

In Fig. 6 the outer edge 14 of the protective cover is lifted so that a sealant may be applied below the outer edge.

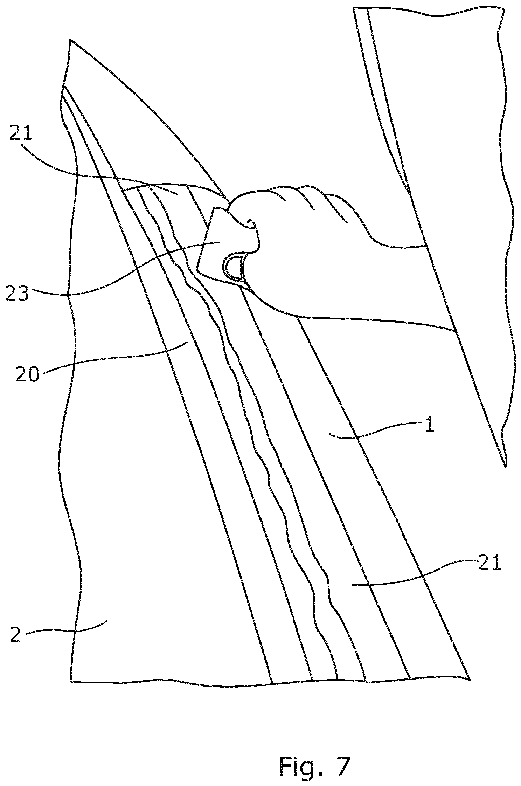

In Fig. 7 the sealant is covered by the masking film and the surplus sealant is squeezed out by use of the scraper 23.

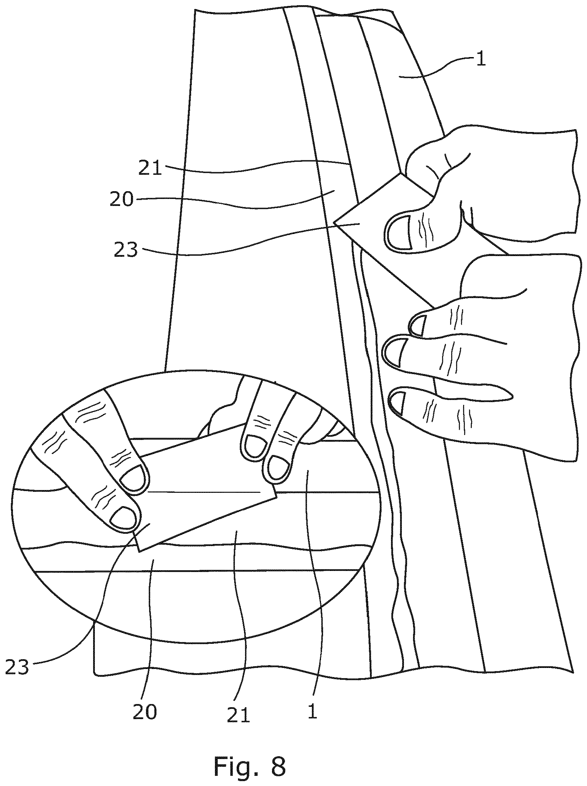

In Fig. 8 the joint is provided under the masking film 21 so that the joint tapers from the protective cover to the masking tape. The joint is formed and smoothened by using a scraper 23 on the sealant from the opposite side of the masking film 21 in relation to the sealant so that direct contact between the scraper 23 and the sealant is avoided.

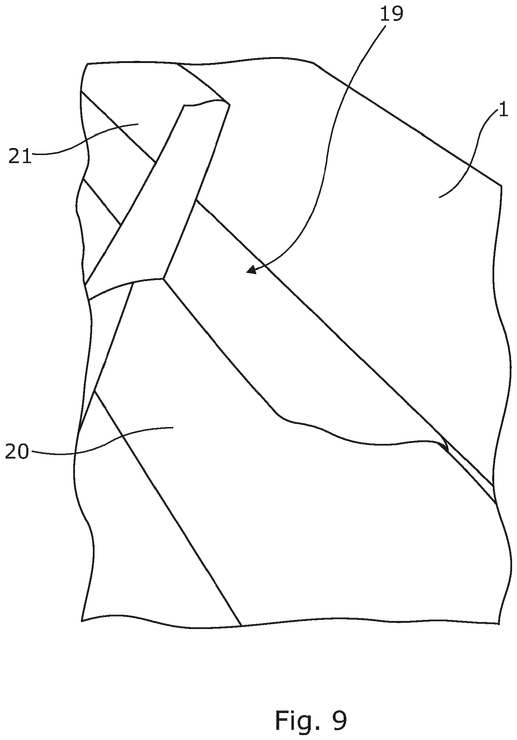

After the joint 19 has been formed and cured, the masking film 21 is detached as shown in Fig. 9. Hereinafter, the masking tape is removed.

Although the invention has been described in the above in connection with preferred embodiments of the invention, it will be evident for a person skilled in the art that several modifications are conceivable without departing from the invention as defined by the following claims.

## Claims

1. A system for attaching an add-on (1) on a wind turbine blade (2), comprising
- a wind turbine blade (2) having
- a leading edge (3) and a trailing edge (4), having a blade profile (5) between them,
- a first face (6), a second face (7), an application surface (8) at the leading edge (3) and/or at the trailing edge (4),
- a longitudinal extension (e) extending from a root end of the wind turbine blade to a tip end of the wind turbine blade,
- an edge centre (9) indicating a centre of the blade profile along the longitudinal extension either at the leading edge (3) or the trailing edge (4),
- an add-on (1) configured to be attached on the wind turbine blade (2) by an adhesive applied between an inside (10) of the add-on and the application surface (8) of the wind turbine blade, the add-on having at least one outer edge (14),
- a masking tape (20) to be detachably applied on the application surface (8) of the wind turbine blade in a predetermined distance from the outer edge (14),
- a joint (19) made of a sealant provided at least between the outer edge (14) of the add-on and the masking tape (20), the joint (19) is formed to taper from the add-on towards the masking tape,
**characterised in that** a masking film (21) is arranged so as to extend across the sealant at least during the forming of the joint (19).

2. A system according to claim 1, wherein the add-on (1) is configured to be attached along at least a part of either the leading edge (3) or the trailing edge (4) along the longitudinal extension (e) of the wind turbine blade (2), and the masking tape (20) is to be detachably applied along the longitudinal extension (e) on the application surface (8) of the wind turbine blade in a predetermined distance from the edge centre (9).

3. A system according to claim 1 and/or 2, wherein the add-on is a protective cover (1) being configured to be attached along at least a part of the leading edge (3) along the longitudinal extension (e) by an adhesive applied between an inside (10) of the protective cover (1) and the application surface (8) of the leading edge (3) of the wind turbine blade, the protective cover (1) is elongated in a longitudinal direction and has an at least substantially U-formed cross-section, the protective cover (1) comprises a central cover section (11) extending in the longitudinal direction and two peripheral cover sections (12, 13) extending in the longitudinal direction at either side of the central cover section (11) and each peripheral cover section having the outer edge (14).

4. A system according to claim 1 and/or 2, wherein the add-on (1) is a serrated element or other appendixes being configured to be attached along at least a part of the trailing edge along the longitudinal extension by an adhesive applied between an inside of the serrated element or the appendix and the application surface of the trailing edge of the wind turbine blade.

5. A system according to claim 3 or 4, wherein the masking film (21) is detachably attached to the protective cover (1) or the serrated element at the outer edges (14), the masking film (21) is extending across the sealant and a part of the masking tape during forming and curing of the joint (19).

6. A system according to any of the preceding claims, wherein the masking film (21) is made of a polymeric material.

7. A system according to any of the preceding claims, wherein the masking film (21) has permeable properties.

8. A system according to any of the preceding claims, wherein the masking tape (20) is applied a tape distance from an intended position of the outer edge (14) of the add-on, protective cover or serrated element on the application surface (8).

9. A system according to any of the preceding claims, wherein the central cover section (11) of the protective cover (1) has a minimum thickness of at least 1 millimetre, and wherein each peripheral cover section (12, 13) has a thickness decreasing from a maximum thickness of at least 1 millimetre to a minimum thickness at its outer edge of less than 1 millimetre.

10. A system according to any of the preceding claims, wherein the joint (19) has a first height (h1) at the outer edge (14) and a second height (h2) at the position where it ends at the application surface (8) of the leading edge (3) of the wind turbine blade, wherein the second height (h2) is smaller than the first height (h1) and smaller than 0.2 millimetres, preferably smaller than 0.1 millimetres.

11. A system according to any of the preceding claims, wherein the joint (19) has a width (W) from the outer edge (14) of the add-on (1) to the position where it ends at the application surface (8) of the wind turbine blade, and wherein said width (W) is between 10 and 75 millimetres, preferably between 20 and 50 millimetres.

12. A system according to claim 3, wherein the joint (19) tapers from the outer edge (14) towards the masking tape (20) substantially with the same inclination as an inclination from the central section (11) of the protective cover (1) to the outer edge (14) of the protective cover (1).

13. A method for attaching an add-on (1) on a wind turbine blade (2) in a system according to any of the preceding claims, comprising
- applying a masking tape (20) in a predetermined distance from the outer edge (14),
- attaching the add-on (1) on the wind turbine blade (2),
- applying a sealant at least between the add-on (1) and masking tape (20),
- covering the sealant with a masking film (21),
- providing the joint under the masking film so that the joint tapers from the outer edge (14) of the add-on (1) to the masking tape (20),
- detaching the masking film (21), and
- removing the masking tape (20).

14. A method according to claim 13, wherein the masking film (21) is applied to the add-on (1) before applying the sealant.

15. A method according to any of the claims 13 to 14, wherein the sealant is applied under a part of the outer edge (14) of the add-on (1) so that the outer edge (14) is securely attached to the application surface (8).

## Patentansprüche

1. System zum Anbringen eines Aufsatzes (1) an einer Windturbinenschaufel (2), umfassend:
- eine Windturbinenschaufel (2), aufweisend:
- eine Vorderkante (3) und eine Hinterkante (4), die ein Schaufelprofil (5) dazwischen aufweisen,
- eine erste Fläche (6), eine zweite Fläche (7), eine Aufbringungsoberfläche (8) an der Vorderkante (3) und/oder an der Hinterkante (4),
- eine Längserstreckung (e), die sich von einem Fußende der Windturbinenschaufel bis zu einem Kopfende der Windturbinenschaufel erstreckt,
- eine Kantenmitte (9), die eine Mitte des Schaufelprofils entlang der Längserstreckung entweder an der Vorderkante (3) oder an der Hinterkante (4) angibt,
- einen Aufsatz (1), der dazu konfiguriert ist, an der Windturbinenschaufel (2) durch einen Klebstoff angebracht zu sein, der zwischen einem Inneren (10) des Aufsatzes und der Aufbringungsoberfläche (8) der Windturbinenschaufel aufgebracht ist, wobei der Aufsatz mindestens eine Außenkante (14) aufweist,
- ein Abdeckband (20), das auf der Aufbringungsoberfläche (8) der Windturbinenschaufel in einer vorbestimmten Entfernung von der Außenkante (14) lösbar aufzubringen ist,
- eine Verbindung (19), die aus einem Dichtmittel gefertigt ist, die mindestens zwischen der Außenkante (14) des Aufsatzes und dem Abdeckband (20) bereitgestellt ist, wobei die Verbindung (19) dazu ausgebildet ist, sich von dem Aufsatz zu dem Abdeckband hin zu verjüngen,
**dadurch gekennzeichnet, dass** eine Abdeckfolie (21) dazu angeordnet ist, sich mindestens während der Ausbildung der Verbindung (19) über das Dichtmittel zu erstrecken.

2. System nach Anspruch 1, wobei der Aufsatz (1) dazu konfiguriert ist, entlang mindestens eines Teils entweder der Vorderkante (3) oder der Hinterkante (4) entlang der Längserstreckung (e) der Windturbinenschaufel (2) angebracht zu sein, und das Abdeckband (20) entlang der Längserstreckung (e) an der Aufbringungsoberfläche (8) der Windturbinenschaufel in einem vorbestimmten Abstand von der Kantenmitte (9) lösbar aufzubringen ist.

3. System nach Anspruch 1 und/oder 2, wobei der Aufsatz eine Schutzabdeckung (1) ist, die dazu konfiguriert ist, entlang mindestens eines Teils der Vorderkante (3) entlang der Längserstreckung (e) durch einen Klebstoff angebracht zu sein, der zwischen einem Inneren (10) der Schutzabdeckung (1) und der Aufbringungsoberfläche (8) der Vorderkante (3) der Windturbinenschaufel aufgebracht ist, wobei die Schutzabdeckung (1) in einer Längsrichtung langgestreckt ist und einen mindestens im Wesentlichen U-förmigen Querschnitt aufweist, wobei die Schutzabdeckung (1) einen mittleren Abdeckabschnitt (11), der sich in der Längsrichtung erstreckt, und zwei periphere Abdeckabschnitte (12, 13), die sich in der Längsrichtung beiderseits des mittleren Abdeckabschnitts (11) erstrecken, umfasst, und wobei jeder periphere Abdeckabschnitt die Außenkante (14) aufweist.

4. System nach Anspruch 1 und/oder 2, wobei der Aufsatz (1) ein gezahntes Element oder andere Ansätze ist, die dazu konfiguriert sind, entlang mindestens eines Teils der Hinterkante entlang der Längserstreckung durch einen Klebstoff angebracht zu sein, der zwischen einem Inneren des gezahnten Elements oder des Ansatzes und der Aufbringungsoberfläche der Hinterkante der Windturbinenschaufel aufgebracht ist.

5. System nach Anspruch 3 oder 4, wobei die Abdeckfolie (21) an der Schutzabdeckung (1) oder dem gezahnten Element an den Außenkanten (14) lösbar angebracht ist und die Abdeckfolie (21) sich während eines Ausbildens und Aushärtens der Verbindung (19) über das Dichtmittel und einen Teil des Abdeckbandes erstreckt.

6. System nach einem der vorhergehenden Ansprüche, wobei die Abdeckfolie (21) aus einem Polymermaterial gefertigt ist.

7. System nach einem der vorhergehenden Ansprüche, wobei die Abdeckfolie (21) durchlässige Eigenschaften aufweist.

8. System nach einem der vorhergehenden Ansprüche, wobei das Abdeckband (20) in einem Bandabstand von einer vorgesehenen Position der Außenkante (14) des Aufsatzes, der Schutzabdeckung oder des gezahnten Elements auf der Aufbringungsoberfläche (8) aufgebracht ist.

9. System nach einem der vorhergehenden Ansprüche, wobei der mittlere Abdeckabschnitt (11) der Schutzabdeckung (1) eine minimale Dicke von mindestens 1 mm aufweist und wobei jeder periphere Abdeckabschnitt (12, 13) eine Dicke aufweist, die von einer maximalen Dicke von mindestens 1 mm auf eine minimale Dicke an seiner Außenkante von weniger als 1 mm abnimmt.

10. System nach einem der vorhergehenden Ansprüche, wobei die Verbindung (19) eine erste Höhe (h1) an der Außenkante (14) und eine zweite Höhe (h2) an der Position, an der sie an der Aufbringungsoberfläche (8) der Vorderkante (3) der Windturbinenschaufel endet, aufweist, wobei die zweite Höhe (h2) kleiner als die erste Höhe (h1) und kleiner als 0,2 mm, bevorzugt kleiner als 0,1 mm ist.

11. System nach einem der vorhergehenden Ansprüche, wobei die Verbindung (19) eine Breite (W) von der Außenkante (14) des Aufsatzes (1) zu der Position, an der sie an der Aufbringungsoberfläche (8) der Windturbinenschaufel endet, aufweist und wobei die Breite (W) zwischen 10 und 75 mm, bevorzugt zwischen 20 und 50 mm, liegt.

12. System nach Anspruch 3, wobei die Verbindung (19) sich von der Außenkante (14) in Richtung des Abdeckbands (20) im Wesentlichen mit derselben Neigung wie eine Neigung von dem Mittelabschnitt (11) der Schutzabdeckung (1) zu der Außenkante (14) der Schutzabdeckung (1) verjüngt.

13. Verfahren zum Anbringen eines Aufsatzes (1) an einer Windturbinenschaufel (2) in einem System nach einem der vorhergehenden Ansprüche, umfassend:
- Aufbringen eines Abdeckbands (20) in einer vorbestimmten Entfernung von der Außenkante (14),
- Anbringen des Aufsatzes (1) an der Windturbinenschaufel (2),
- Aufbringen eines Dichtmittels mindestens zwischen dem Aufsatz (1) und dem Abdeckband (20),
- Abdecken des Dichtmittels mit einer Abdeckfolie (21),
- Bereitstellen der Verbindung unter der Abdeckfolie, sodass sich die Verbindung von der Außenkante (14) des Aufsatzes (1) zu dem Abdeckband (20) verjüngt,
- Lösen der Abdeckfolie (21) und
- Entfernen des Abdeckbandes (20).

14. Verfahren nach Anspruch 13, wobei die Abdeckfolie (21) vor dem Aufbringen des Dichtmittels auf den Aufsatz (1) aufgebracht wird.

15. Verfahren nach einem der Ansprüche 13 bis 14, wobei das Dichtmittel unter einem Teil der Außenkante (14) des Aufsatzes (1) aufgebracht wird, sodass die Außenkante (14) fest an der Aufbringungsoberfläche (8) angebracht ist.

## Revendications

1. Système pour fixer un module d'extension (1) sur une pale de turbine éolienne (2), comprenant
- une pale de turbine éolienne (2) ayant
- un bord d'attaque (3) et un bord de fuite (4), ayant un profil d'aube (5) entre eux,
- une première face (6), une seconde face (7), une surface d'application (8) au niveau du bord d'attaque (3) et/ou au niveau du bord de fuite (4),
- une extension longitudinale (e) s'étendant d'une extrémité d'emplanture de la pale de turbine éolienne à une extrémité de pointe de la pale de turbine éolienne,
- un centre de bord (9) indiquant un centre du profil de pale le long de l'extension longitudinale soit au niveau du bord d'attaque (3) soit au niveau du bord de fuite (4),
- un module d'extension (1) configuré pour être fixé sur la pale de turbine éolienne (2) par un adhésif appliqué entre un intérieur (10) du module d'extension et la surface d'application (8) de la pale de turbine éolienne, le module d'extension ayant au moins un bord extérieur (14),
- un ruban de masquage (20) devant être appliqué de manière amovible sur la surface d'application (8) de la pale de turbine éolienne à une distance prédéterminée du bord extérieur (14),
- un joint (19) constitué d'un matériau d'étanchéité prévu au moins entre le bord extérieur (14) du module d'extension et du ruban de masquage (20), le joint (19) est formé pour se rétrécir du module d'extension au ruban de masquage,
**caractérisé en ce qu'**un film de masquage (21) est agencé de manière à s'étendre vers le produit d'étanchéité au moins pendant la formation du joint (19).

2. Système selon la revendication 1, dans lequel le module d'extension (1) est configuré pour être fixé le long d'au moins une partie du bord d'attaque (3) ou du bord de fuite (4) le long de l'extension longitudinale (e) de la pale de turbine éolienne (2), et le ruban de masquage (20) doit être appliqué de manière amovible le long de l'extension longitudinale (e) sur la surface d'application (8) de la pale de turbine éolienne à une distance prédéterminée du centre de bord (9).

3. Système selon la revendication 1 et/ou 2, dans lequel le module d'extension est un revêtement de protection (1) configuré pour être fixé le long d'au moins une partie du bord d'attaque (3) le long de l'extension longitudinale (e) par un adhésif appliqué entre un intérieur (10) du revêtement de protection (1) et la surface d'application (8) du bord d'attaque (3) de la pale de turbine éolienne, le revêtement de protection (1) est allongé dans une direction longitudinale et a une section transversale au moins sensiblement en forme de U, le revêtement de protection (1) comprend une section de revêtement central (11) s'étendant dans la direction longitudinale et deux sections de revêtement périphériques (12, 13) s'étendant dans la direction longitudinale de part et d'autre de la section de revêtement centrale (11) et chaque section de revêtement périphérique ayant le bord extérieur (14).

4. Système selon la revendication 1 et/ou 2, dans lequel le module d'extension (1) est un élément dentelé ou d'autres appendices configurés pour être fixés le long d'au moins une partie du bord de fuite le long de l'extension longitudinale par un adhésif appliqué entre un intérieur de l'élément dentelé ou de l'appendice et la surface d'application du bord de fuite de la pale de turbine éolienne.

5. Système selon la revendication 3 ou 4, dans lequel le film de masquage (21) est fixé de manière amovible au revêtement de protection (1) ou à l'élément dentelé au niveau des bords extérieurs (14), le film de masquage (21) s'étend à travers le produit d'étanchéité et une partie du ruban de masquage pendant la formation et le durcissement du joint (19).

6. Système selon l'une quelconque des revendications précédentes, dans lequel le film de masquage (21) est constitué d'un matériau polymère.

7. Système selon l'une quelconque des revendications précédentes, dans lequel le film de masquage (21) a des propriétés perméables.

8. Système selon l'une quelconque des revendications précédentes, dans lequel le ruban de masquage (20) est appliqué à une distance de ruban d'une position prévue du bord extérieur (14) du module d'extension, du revêtement de protection ou de l'élément dentelé sur la surface d'application (8).

9. Système selon l'une quelconque des revendications précédentes, dans lequel la section de revêtement centrale (11) du revêtement de protection (1) a une épaisseur minimale d'au moins 1 millimètre, et dans lequel chaque section de revêtement périphérique (12, 13) a une épaisseur décroissante d'une épaisseur maximale d'au moins 1 millimètre à une épaisseur minimale au niveau de son bord extérieur inférieure à 1 millimètre.

10. Système selon l'une quelconque des revendications précédentes, dans lequel le joint (19) a une première hauteur (h1) au niveau du bord extérieur (14) et une seconde hauteur (h2) au niveau de la position où il se termine au niveau de la surface d'application (8) du bord d'attaque (3) de la pale de turbine éolienne, dans lequel la seconde hauteur (h2) est inférieure à la première hauteur (h1) et inférieure à 0,2 millimètre, de préférence inférieure à 0,1 millimètre.

11. Système selon l'une quelconque des revendications précédentes, dans lequel le joint (19) a une largeur (W) depuis le bord extérieur (14) du module d'extension (1) jusqu'à la position où il se termine au niveau de la surface d'application (8) de la pale de turbine éolienne, et dans lequel ladite largeur (W) est comprise entre 10 et 75 millimètres, de préférence entre 20 et 50 millimètres.

12. Système selon la revendication 3, dans lequel le joint (19) se rétrécit depuis le bord extérieur (14) vers le ruban de masquage (20) sensiblement avec la même inclinaison qu'une inclinaison depuis la section centrale (11) du revêtement de protection (1) au bord extérieur (14) du revêtement de protection (1).

13. Procédé pour fixer un module d'extension (1) sur une pale de turbine éolienne (2) dans un système selon l'une quelconque des revendications précédentes, comprenant
- l'application d'un ruban de masquage (20) à une distance prédéterminée du bord extérieur (14),
- la fixation du module d'extension (1) sur la pale de turbine éolienne (2),
- l'application d'un produit d'étanchéité au moins entre le module d'extension (1) et le ruban de masquage (20),
- le recouvrement du produit d'étanchéité avec un film de masquage (21),
- la fourniture du joint sous le film de masquage de manière à ce que le joint se rétrécisse depuis le bord extérieur (14) du module d'extension (1) jusqu'au ruban de masquage (20),
- le détachement du film de masquage (21), et
- le retrait du ruban de masquage (20).

14. Procédé selon la revendication 13, dans lequel le film de masquage (21) est appliqué sur le module d'extension (1) avant d'appliquer le produit d'étanchéité.

15. Procédé selon l'une quelconque des revendications 13 et 14, dans lequel le produit d'étanchéité est appliqué sous une partie du bord extérieur (14) du module d'extension (1) de sorte que le bord extérieur (14) est solidement fixé à la surface d'application (8).
